# EUROPEAN PATENT APPLICATION

(11) **EP 4 023 417 A1**
(43) Date of publication of application: **06.07.2022**
(21) Application number: 20856797.4
(22) Date of filing: 27.08.2020
(51) Int. Cl.: B29C 64/209, B33Y 30/00

(54) **BUILDING MIXTURE EXTRUDER FOR 3D PRINTER**

(30) Priority: 28.08.2019 RU 2019127053
(71) Applicant: AMT Limited Liability Company, Moscow, 121205 (RU)
(72) Inventor: MASLOV, Aleksandr Vladimirovich, Semibratovo, 152101 (RU)
(74) Representative: Berggren Oy
(86) International application number: PCT/RU2020/050209
(87) International publication number: WO 2021/040578

(57) **Abstract**

The invention relates to the field of construction, specifically, to the construction 3D printers, in particular, to the construction mixes extrusion devices intended to be installed on the construction 3D printers of various configurations for the purpose of engineering structures production, including for the construction of residence buildings and buildings and structures for various applications, for the production of parts and elements of buildings, the engineering structures components and of other products of simple and complex geometric shapes using additive processes. 3D printer construction mixes extrusion device consisting of a container with a mounting arrangement allowing attaching the extrusion device to the printer actuators, an opening for the construction material loading and a nozzle with outlet openings for the construction material extrusion, wherein the lower container part contains an integrated construction mix dispenser allowing regulating the construction mix amount while forming the printable layer; also, the extrusion device comprises an admixing device made in the form of an admixing frame with a drive which is simultaneously the construction mix dispenser drive. The construction mix dispenser is made in the form of an auger or a gerotor pair. The extruder also comprises a shutoff valve for the elimination of an inadvertent construction mix discharge and the supply lines for the introduction of the plasticizing and/or other additives. The supply lines are made in the form of a union nipple. The outlet opening of the nozzle for the construction material extrusion is made with a circular cross-section or a square cross-section or a rectangular cross-section or a serrated edge for forming the layer of a necessary shape. The outlet opening of the nozzle is arranged at an angle to the layer stacking direction. A surface forming device in the form of smoothing or textured blades is installed on the nozzle. The nozzle is made rotatable, with a rotation axis drive to provide for the nozzle turning in the direction of travel. The extrusion device also comprises a device for laying a flexible reinforcement structure in the form of a steel or composite wire, the said device being made in the form of a drive arrangement with a reel comprising the wire and an input device located directly inside the nozzle, for feeding the wire directly into the laid out mix. The invention allows to considerable increase the printer performance, to improve the printing accuracy and the construction mixes deposition quality and to reduce the equipment flushing' and routine maintenance time.

## Description

### Field of the invention

The invention relates to the field of construction, specifically, to the construction 3D printers, in particular, to the construction mixes extrusion devices intended to be installed on the construction 3D printers of various configurations for the purpose of engineering structures production, including for the construction of residence buildings and buildings and structures for various applications, for the production of parts and elements of buildings, the engineering structures components and of other products of simple and complex geometric shapes using additive processes.

### Background

All the known 3D printing methods are based on the following steps: formation of the manufactured object cross-sections, layerwise superimposition of these cross-sections and the combining of layers, with the creation of a specified product geometry matching the computer 3D model.

Depending on the selected 3D printing process, various materials can be used: powdered metals, ceramic powders, tars, waxes, plastics, various sheet materials, composite materials (composed of cellulose compounds, special fibers and other additives, molding sands / additives mixtures), construction mixes based on cement, gypsum, fire clay.

The construction 3D printing can be carried out using different methods and various materials based on the principle of a solid object layerwise creation (growing), as a result of which the object is formed by layerwise deposition of the construction material up to the formed layer height.

To print the engineering structures, the following materials are used: cement (portland cement), sand (silicone dioxide, olivine, chromite, zircon, alumina, mullite, silica glass, fireclay), gypsum, modifying and antifreeze additives, plasticizers, fibers, curing accelerators/retarders, water and composite materials based on lignin and cellulose.

In all the known cases, irrespective of the printer design (portal-like or with robotic manipulator based angular coordinates), the construction printers are not equipped with extrusion devices that would allow simultaneous construction mix automated/manual feed, the construction mix accumulation, its dispensing using the CNC based actuating devices, introduction of plasticizing and other additives directly to the extrusion device, eliminating inadvertent construction mix discharge using a shutoff valve, admixing of the construction mix in the extrusion device container to prevent its lamination and clotting or using the construction mixes based not only on cement binder.

The prior art discloses a process of a formation (extrusion) of a wall with inner fins (see [1] application PCT No. WO2007050972, MΠK B28B 1/16, publ. date 03.05.2007). The published application presents the description of an extrusion nozzle including three outputs with a controller allowing to direct the extruded material into three outlets.

The disadvantages of this analog are as follows:
- absence of a container that would allow accumulating the construction mix during manual or automated filling of the extrusion device;
- absence of a container integrated construction mix dispenser that would allow regulating the construction mix amount while forming the printable layer. The dispenser can comprise mechanisms built based on the CNC drive and control elements;
- absence of an admixing device that would allow avoiding the lamination and clotting of the constriction material used for printing;
- absence of additional supply lines for the introduction of the plasticizing and other additives;
- absence of a shutoff valve for the elimination of an inadvertent construction mix discharge.

The closest (as far as the feature sets are concerned) prior art to the claimed invention is the method and device for the cement materials supply, taken as a prototype (see [2] application PCT No. WO2013064826, MΠK B28B 17/00, B28B 3/20, B28B 3/26, publ. date 10.05.2013). The application presents the description of the process of a cement based material extrusion through a nozzle. In the present solution it is suggested that the extrusion device is arranged only on the manipulator; only cement binder based construction mixes use is contemplated.

In the simplified construction of the 3D printer construction mixes extrusion device no provisions are made for the use of the following elements:
- a container as the construction mix accumulating device during manual or automated filling of the extrusion device;
- a construction mix dispenser that would allow regulating the construction mix amount while forming the printable layer;
- an admixing device that would allow avoiding the lamination and clotting of the constriction material used for printing;
- a vibrator that would allow compacting the extruded construction material while stacking it in layers;
- additional supply lines for the introduction of the plasticizing and other additives;
- a shutoff valve for the elimination of an inadvertent construction mix discharge.

### Summary of the Invention

The technical problem to be solved by the invention is the elimination of the disadvantages present in analogs and the expansion of functional capabilities.

The technical result of the claimed invention consists in considerable increase of the printer performance, the improvement of the printing accuracy and the construction mixes deposition quality and the reduction in the equipment flushing' and routine maintenance time.

According to the invention, the engineering problem is solved and the technical result is achieved due to the fact that the 3D printer construction mixes extrusion device consists of a container with a mounting arrangement allowing attaching the extrusion device to the printer actuators, an opening for the construction material loading and a nozzle with an outlet opening for the construction material extrusion, wherein the lower container part contains an integrated construction mix dispenser allowing regulating the construction mix amount while forming the printable layer; the extrusion device also comprises an admixing device made in the form of an admixing frame with a drive which is simultaneously the construction mix dispenser drive.

Also, the engineering problem is solved and the technical result is achieved due to the fact that the construction mix dispenser is made in the form of an auger or a gerotor pair.

Also, the engineering problem is solved and the technical result is achieved due to the fact that the device contains a shutoff valve for the elimination of an inadvertent construction mix discharge.

Also, the engineering problem is solved and the technical result is achieved due to the fact that the device additionally comprises supply lines for the introduction of the plasticizing and/or other additives.

Also, the engineering problem is solved and the technical result is achieved due to the fact that the supply lines are made in the form of a union nipple.

Also, the engineering problem is solved and the technical result is achieved due to the fact that the outlet opening of the nozzle for the construction material extrusion is made with a circular cross-section or a square cross-section or a rectangular cross-section or a serrated edge for forming the layer of a necessary shape.

Also, the engineering problem is solved and the technical result is achieved due to the fact that the outlet opening of the nozzle is arranged at an angle to the layer stacking direction.

Also, the engineering problem is solved and the technical result is achieved due to the fact that a surface forming device in the form of smoothing or textured blades is installed on the nozzle.

Also, the engineering problem is solved and the technical result is achieved due to the fact that the nozzle is made rotatable, with a rotation axis drive to provide for the nozzle turning in the direction of travel.

Also, the engineering problem is solved and the technical result is achieved due to the fact that the device additionally comprises a device for laying a flexible reinforcement structure in the form of a steel or composite wire, the said device being made in the form of a drive arrangement with a reel comprising the wire and an input device located directly inside the nozzle, for feeding the wire directly into the laid out mix.

### Brief description of drawings

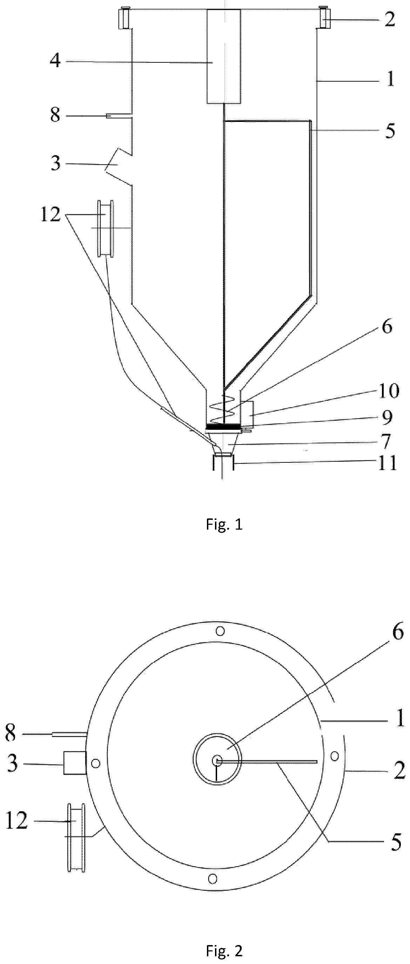

Fig. 1 - side view (cross-sectional view) of the 3D printer construction mixes extrusion device.
Fig. 2 -top view of the 3D printer construction mixes extrusion device.
Fig. 3 - bottom view of the 3D printer construction mixes extrusion device.
Fig. 4 - the shutoff valve for eliminating an inadvertent construction mix discharge; additional supply lines for the introduction of the plasticizing and other additives.
Fig. 5 - nozzle for the construction mixes deposition with a circular opening.
Fig. 6 - nozzle for the construction mixes deposition with a rectangular opening allowing forming a layer close to the wall smooth in the vertical plane.
Fig. 7 - nozzle with a serrated edge allowing forming uneven upper surface for enhancing the interlayer adhesion.
Fig. 8 - nozzle with various configurations of the outlet openings arranged at an angle to the layer stacking direction to form layers of various geometry, including the rectangular ones, allowing forming a layer close to the wall smooth in the vertical plane.
Fig. 9 - rotation axis for turning the nozzle in the direction of the printing head travel.
Fig. 10 - reinforcement structure laying out device constituting a drive for reeling out of the flexible reinforcement structure made of a steel or composite wire.
Fig. 11 - surface forming device in the form of smoothing or textured blades.

### The following items are specified in figures:

*1 - container (body) of the extrusion device;*
*2* - *mounting arrangement;*
*3* - *an opening for loading (feeding) the construction material (construction mix) into the extrusion device;*
*4* - *the dispenser' and admixing frame drive;*
*5* - *admixing frame;*
*6* - *dispenser (an auger or a gerotor pair);*
7 - *nozzle;*
*8* - *union nipple (supply lines) for supplying the plasticizing and other additives into the construction mix;*
*9* - *shutoff valve;*
*10* - *rotation axis drive for turning the nozzle and the surface forming device in the form of smoothing or textured blades in the direction of the printing head travel;*
*11* - *the surface forming device in the form of smoothing or textured blades;*
*12* - *device for laying out the reinforcement structure constituting a drive for reeling out the flexible reinforcement structure made* of a *steel or composite wire;*
*13* - *printed structure (smoothed out layers).*

### Implementation of the invention

The 3D printer construction mixes extrusion device is intended for a layerwise automated stacking of layers consisting from the mixes (a construction material) based on cement, gypsum, fired clay.

The extrusion device consists of the container (1) with a mounting arrangement (2), the opening (3) for the construction material loading and the nozzle (7) with an outlet opening for the construction material extrusion. The mounting arrangement (2) allows to constructively attach the extruding device to the 3D printer actuators utilizing different layout patterns and to provide for the schemes operating either in orthogonal coordinates or angular coordinates, or for the robotic manipulator scheme. The lower container (1) part contains an integrated construction mix dispenser (6) made in the form of an auger or a gerotor pair allowing regulating the construction mix amount (feed) while forming the printable layer. The extrusion device also comprises an admixing device arranged in the container (1) and made in the form of an admixing frame (5) with the drive (4) located in the upper part of the container (1). The admixing device allows avoiding the lamination and clotting of the constriction material used for printing.

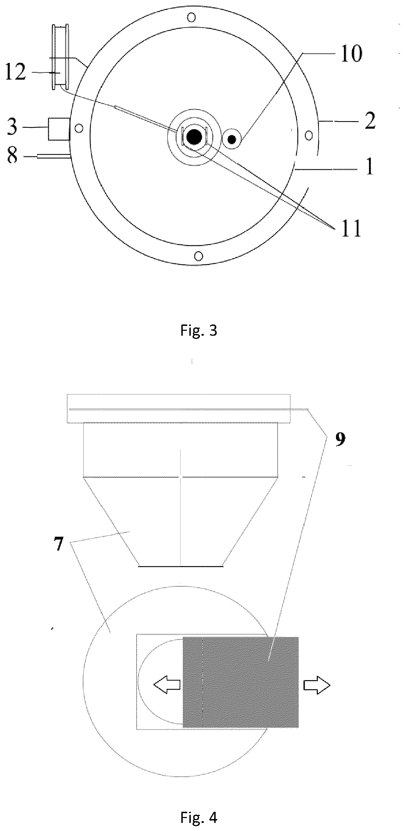

The extrusion device additionally comprises a shutoff valve (9) arranged between the nozzle (7) and the dispenser (6), to eliminate an inadvertent construction mix discharge (Fig. 4). The container (1) features the supply lines (8), e.g., in the form of a union nipple, for the introduction of the plasticizing and other additives.

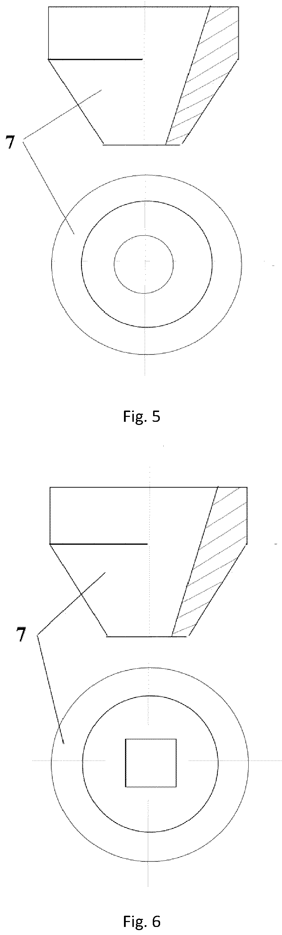

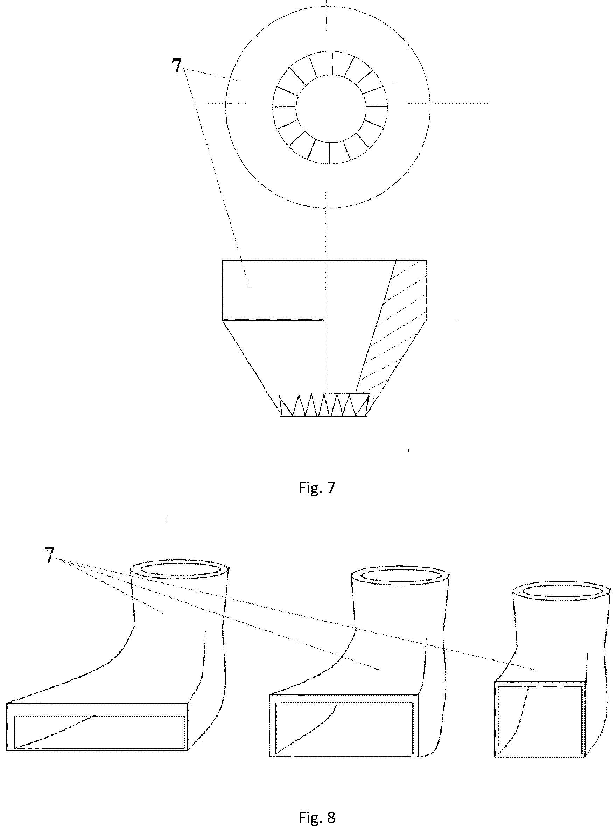

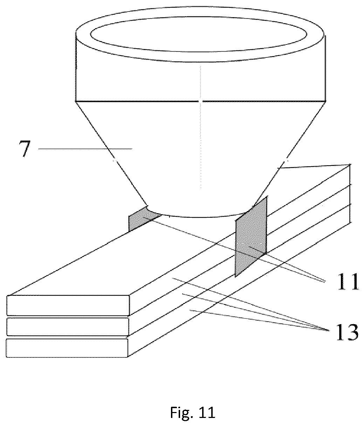

The outlet opening of the nozzle (7) for the construction material extrusion can be variably configured to form the construction material stacked layer of necessary shape, e.g., be made with a circular cross-section (Fig. 5) or with a square cross-section or with a rectangular cross-section (Fig. 6) or with a serrated edge (Fig. 7) allowing forming uneven upper surface of the layer for enhancing the interlayer adhesion. Wherein the nozzle (7) with the outlet opening of variable configuration can be arranged at an angle to the layer stacking direction to form the layers of various geometry, including the rectangular ones, allowing forming a layer close to the wall smooth in the vertical plane (Fig 8). A surface forming device (11) in the form of smoothing or textured blades can also be installed on the nozzle (Fig. 11).

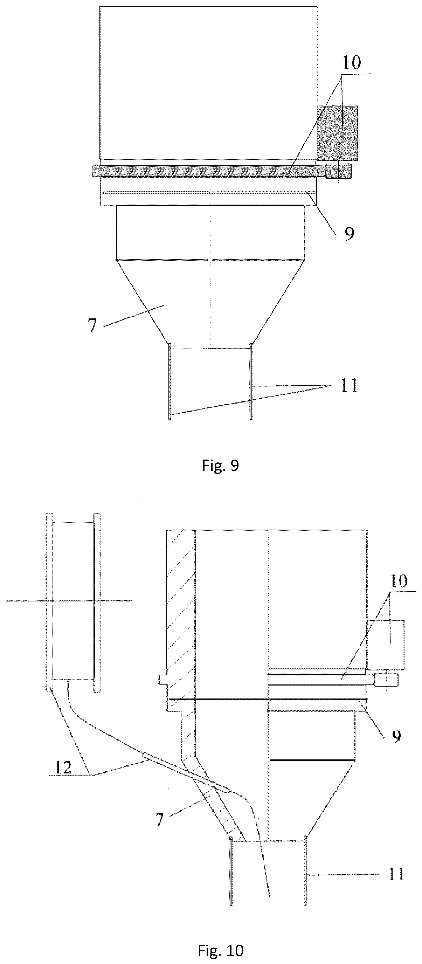

The extruder can additionally comprise mechanisms built based on the CNC drive and control elements. Specifically, in the claimed invention the nozzle (7) can be made rotatable, with a rotation axis drive (10) to provide for the nozzle (7) turning in the direction of travel (Fig. 9).

The extrusion device additionally comprises the device (12) for laying a flexible reinforcement structure in the form of a steel or composite wire, made in the form of a drive arrangement for winding/unwinding the wire (flexible reinforcement structure) onto/from the reel, featuring an input device located directly inside the nozzle, for feeding the wire directly into the laid out mix.

### The device operates as follows.

The construction mix is loaded (fed) into the container (1) of the extrusion device attached to the printer actuators with the help of the mounting arrangement (2), through the opening (3) for the loading (feeding) of the construction material (construction mix) into the extrusion device. The mix is fed to the nozzle (7) of the extrusion device through the dispenser (6) made in the form of an auger or a gerotor pair rotated by the dispenser, and an admixing frame drive (4). The admixing frame (5) arranged on the drive (4) shaft is designed for stirring the mix, to prevent its lamination and clotting. The construction mix dispenser (6) allows regulating the amount of the extruded construction mix while forming the printable layer of the printed structure (13).

To eliminate an inadvertent construction mix discharge, the extrusion device can comprise the shutoff valve (9). To introduce the plasticizing and other additives, the extrusion device can be equipped with additional supply lines (8) in the form of a union nipple for supplying the plasticizing and other additives into the construction mix.

To stack the layer in the direction of the printer extrusion device travel, a rotation axis nozzle turning drive (10) is used. The same drive turns the forming device (11) in the form of smoothing or textured blades in the direction of the extrusion device travel.

To lay out the reinforcement structure in the printable layer body, the device (12) for laying a flexible reinforcement structure is used, constituting a drive for reeling out of the flexible reinforcement structure made of a steel or composite wire.

At the end of operation, the extrusion device is flushed through the opening for the loading (feeding) of the construction material (construction mix) into the extrusion device, as well as through the union nipple for supplying the plasticizing and other additives into the construction mix.

The cause-and-effect relationship between the essential features of the invention and the expected technical result is as follows:
- ensuring high surface quality and improvement of the printed objects mechanical characteristics while printing buildings and structures thanks to installing the construction mix dispenser allowing regulating the amount of construction mix while forming the printable layer and thanks to using the admixing device allowing avoiding the lamination and clotting of the constriction material used for printing, as well as the shutoff valve for eliminating an inadvertent construction mix discharge and the variably configured nozzles for forming the construction material stacked layer;
- expansion of the 3D printer construction mixes extrusion device functional capabilities, which can comprise mechanisms built based on the CNC drive and control elements allowing to control the rotary motion of the nozzle and of the smoothing device (the surface forming device) and the additional supply lines for the introduction of the plasticizing and other additives, and to save time and money thanks to a simplified routine maintenance procedure;
- automation of the reinforcing procedure during the printing process thanks to equipping the extrusion device with the reinforcement structure laying out device.

## Claims

1. 3D printer construction mixes extrusion device consisting of a container (1) with a mounting arrangement (2) allowing attaching the extrusion device to the printer actuators, an opening (3) for the construction material loading and a nozzle (7) with outlet opening for the construction material extrusion, wherein the lower container part (1) contains an integrated construction mix dispenser (6) allowing regulating the construction mix amount while forming the printable layer, **characterized in that** it comprises an admixing device made in the form of an admixing frame (5) with a drive (4) which is simultaneously the construction mix dispenser (6) drive.

2. Extrusion device according to claim 1, **characterized in that** the construction mix dispenser (6) is made in the form of an auger or a gerotor pair.

3. Extrusion device according to claim 1, **characterized in that** it comprises a shutoff valve (9) for eliminating an inadvertent construction mix discharge.

4. Extrusion device according to claim 1, **characterized in that** it additionally comprises the supply lines (8) for the introduction of the plasticizing and other additives.

5. Extrusion device according to claim 4, **characterized in that** the supply lines (8) are made in the form of a union nipple.

6. Extrusion device according to claim 1, **characterized in that** the outlet opening of the nozzle (7) for the construction material extrusion is made with a circular cross-section or a square cross-section or a rectangular cross-section or a serrated edge for forming the layer of a necessary shape.

7. Extrusion device according to claim 1 or 6, **characterized in that** the outlet opening of the nozzle (7) is arranged at an angle to the layer stacking direction.

8. Extrusion device according to claim 1, **characterized in that** a surface forming device (11) in the form of smoothing or textured blades is installed on the nozzle (7).

9. Extrusion device according to claim 1 or 8, **characterized in that** the nozzle (7) is made rotatable, with a rotation axis drive (10) to provide for the nozzle turning in the direction of travel.

10. Extrusion device according to claim 1, **characterized in that** it additionally comprises a device (12) for laying a flexible reinforcement structure in the form of a steel or composite wire, the said device being made in the form of a drive arrangement with a reel comprising the wire and an input device located directly inside the nozzle, for feeding the wire directly into the laid out mix.
